# EUROPEAN PATENT SPECIFICATION

(11) **EP 0 325 443 B1**
(45) Date of publication and mention of the grant of the patent: **01.03.1995**
(21) Application number: 89300480.4
(22) Date of filing: 19.01.1989
(51) Int. Cl.: G06F 3/023

(54) **Help facility shared by a plurality of applications**
Hilfssystem, durch mehrere Anwendungen geteilt
Système d'aide à l'utilisateur partagé par plusieurs applications

(30) Priority: 22.01.1988 US 146985
(43) Date of publication of application: 26.07.1989
(73) Proprietor: Hewlett-Packard Company, Palo Alto, California 94304 (US)
(72) Inventor: Weiner, Jonathan A., Palo Alto California 94301 (US)
(74) Representative: Colgan, Stephen James

(56) References cited:
- EP-A- 0 056 886
- EP-A- 0 171 663

## Description

On-line help systems are facilities that are an integral part of many interactive applications. On-line help systems provide to a user information about how to use an application while the user is using the application. Such on-line help systems are especially helpful to a user who does not want to take time to look up information in a manual, a user who does not have a manual, or a user who is intimidated by manuals.

Typically, however, help systems are added to an application hastily, as the last thing to be done before an application goes "out the door". The result is often a help system that is incomplete, poorly written or confusing to a user.

EP-A-56886 discloses a data processing system having interactive display terminals each with program function keys at which users enter data to be processed into field positions in maps displayed at the terminal and associated with particular application programs and in which application programs are run under the control of an operating system and having means in the operating system to allow a designer of maps for an application program to create a tutorial screen at the same time a map is defined so that when a data entry user requires help in interpreting a defined map the operating system automatically displays the tutorial screen associated with the map in response to an input from the associated program function key.

### Summary of the Invention

In accordance with the preferred embodiment of the present invention, a computing system is presented which provides a uniform interface for a plurality of applications. For each application in the plurality of applications a help text file is provided. From each application in the plurality of applications, a user may call a main help routine. This main help routine interactively presents information to the user by accessing the help text file for the application from which the main help routine is called in response to specific queries for particular information. Thus the user is able to use a standard interface to obtain help information about a particular application. The computing system according to the invention is defined in claim 1. Its method of operation is defined in claim 4.

### Brief Description of the Drawings

Figure 1 shows a block diagram of a computing system in accordance with the preferred embodiment of the present invention.

Figure 2 shows a mouse in accordance with the preferred embodiment of the present invention.

Figures 3 through 9 show display screens which illustrate performance of the preferred embodiment of the present invention.

Figures 10 through 16 are block diagrams which show information flow through the preferred embodiment of the present invention.

Figures 17 and 18 show the structure of a file used in the preferred embodiment of the present invention.

### Description of the Preferred Embodiment

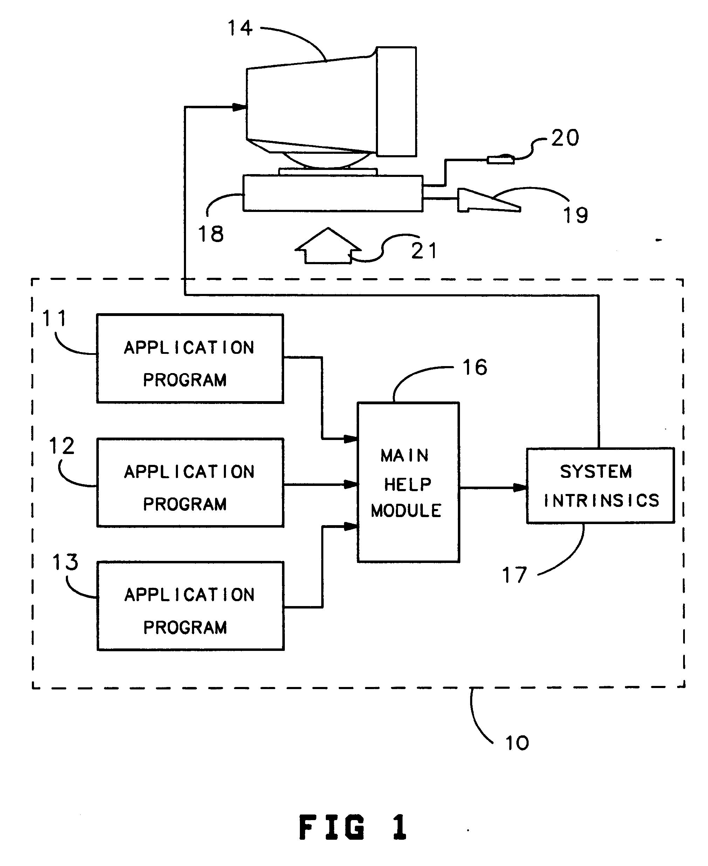

Figure 1 shows a computing system in accordance with the preferred embodiment of the present invention. A monitor 14, a mouse 20 and a keyboard 19 are coupled to a computer 18. A memory 10 is resident within computer 18 as represented by arrow 21.

Memory 10, may, for example, contain an application program 11, an application program 12, an application program 13, a main help module 16 and system intrinsics 17.

Application programs 11, 12 and 13 call a main help module 16. Main help module 16 utilizes system intrinsics 17 to display information on monitor 14.

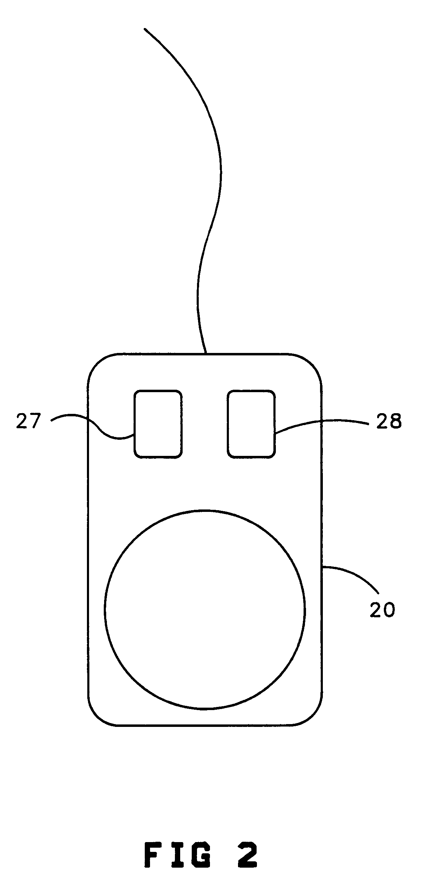

Figure 2 shows a top view of mouse 20. Mouse 20 includes a button 27 and a button 28.

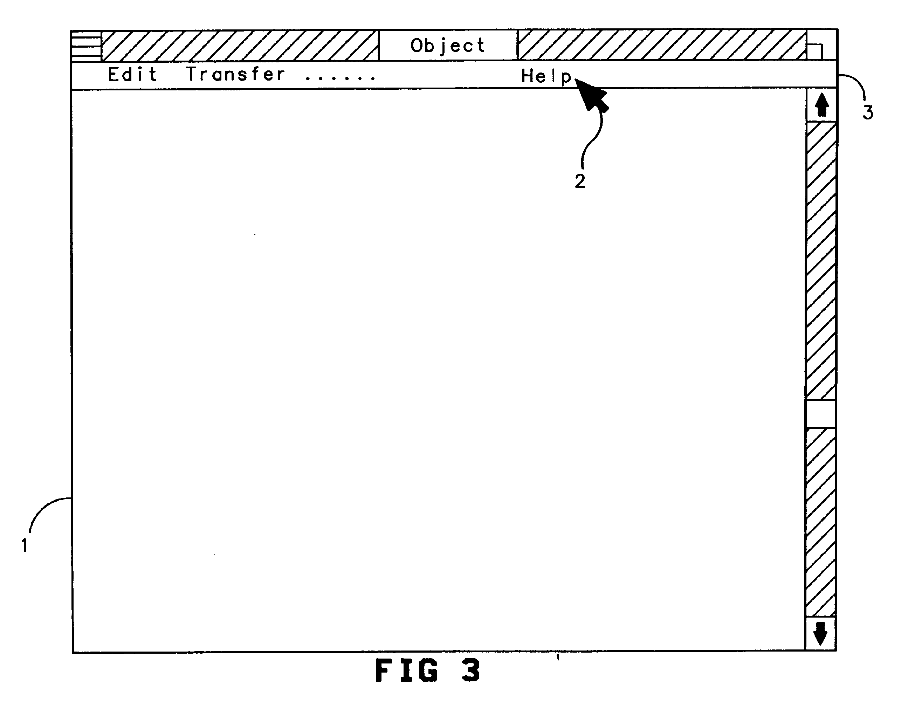

Figure 3 shows a window 1 displayed upon monitor 14. Window 1 includes a command bar 3. Command bar 3 includes a list of commands. For example, "Edit" "Transfer" and "Help" are shown. The command "Help" is listed in command bars displayed by applications 11, 12 and 13, and any other application that calls main help module 16.

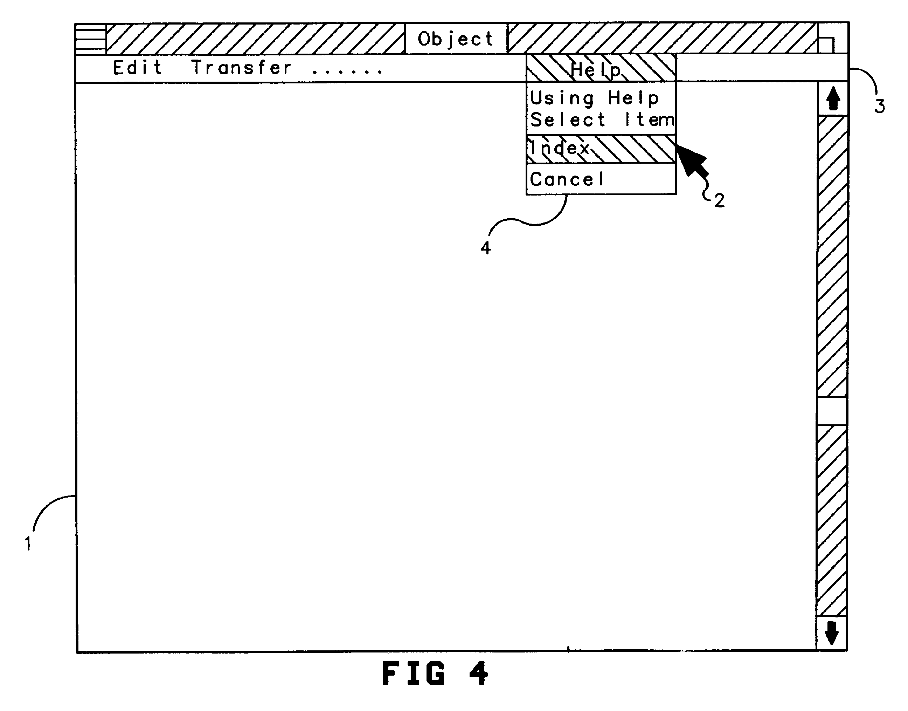

A cursor 2, controlled by mouse 20, is used to select commands on command bar 3. For instance, placing cursor 2 over "Help" on command bar and clicking button 27 on mouse 20 results in the appearance of a menu 4 shown in Figure 4.

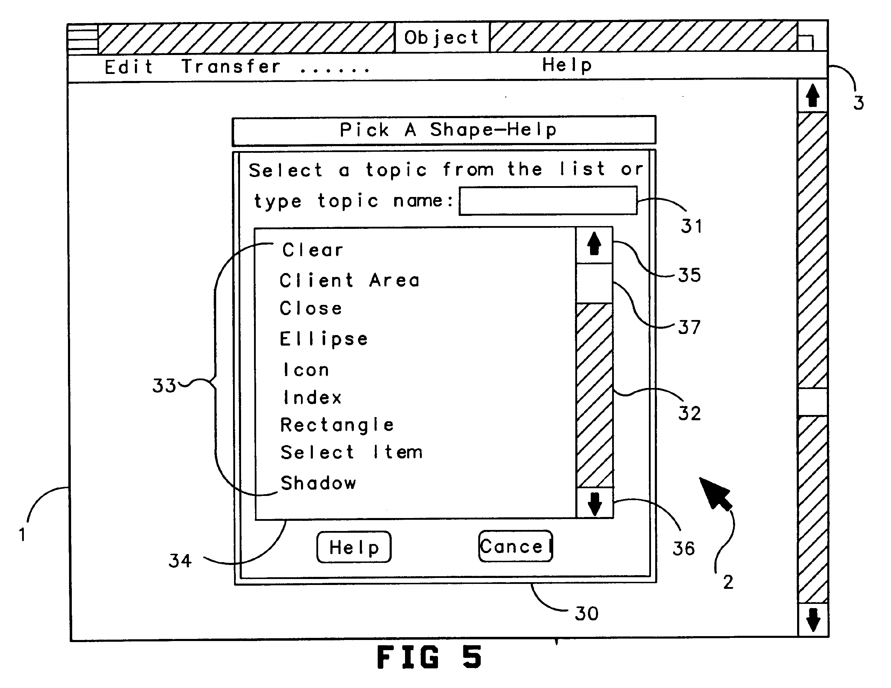

As cursor 2 points at an entry in menu 4 causes the entry to be shaded. Clicking button 27 on mouse 20 results in the shaded entry being selected. For instance, if "Cancel" is chosen, window 1 will return to the display shown in Figure 3. In Figure 4, the entry "Index" is shown shaded. Clicking button 27 on mouse 20 would result in the display of a selection box 30 as shown in Figure 5.

Within selection box 30 is a list box 34. Within list box 34 selection entries 33 are displayed. In the present embodiment, each entry from selection entries 33 describes a topic for which a "help" program will provide information. Thus, for instance, a user can get information on icons by selecting the entry from the selection of displayed entries 33 which says "Icon".

When a user wants to select one of selection entries 33 he moves mouse 20 such that cursor 2 is placed over a selected entry of selection entries 33. The user then pushes down button 27 on mouse 20, which causes the selected entry to be highlighted. Moving mouse 20 and thus cursor 2 will cause different entries to be highlighted. Once a user releases button 27 on mouse 20, the highlighted entry will be selected. When a entry is selected, information pertaining to the selected entry will be displayed.

Only a limited number of selections may be displayed at one time. For instance, in Figure 5, only nine entries in alphabetical order are shown. However, a total list of the entries may be much larger. The other selections may be addressed by using scroll bar 32. Scroll bar 32 contains a scroll region 37, an arrow box 35 and an arrow box 36. In Figure 5 scroll region 37 is at the border of arrow box 35. This indicates that the first entries of the list of entries are shown. When scroll region 37 is at the border of arrow box 36, this indicates that the last entries of the list of entries are shown. When scroll region 37 is in between these extreme positions, this indicates some intermediate entries of the list of entries are being shown.

Scroll region 37 may be moved by various methods. For instance, when scroll region 37 is not at the border of arrow box 36, a user may scroll down the shown list of entries by placing cursor 2 in arrow 36 and depressing button 27 on mouse 20. Upon each depression of the button the top displayed entry disappears, a new bottom entry appears at the bottom and all the other selections move upward. Also, scroll region 37 moves incrementally downward. Similarly, placing cursor 2 in arrow 35 and depressing the button on the mouse causes the list of entries to be scrolled upward and scroll region 37 to be moved incrementally upward. Further, the list of entries may be scrolled by placing cursor 2 in scroll region 37 and depressing the button on the mouse. The scroll region will then follow cursor 2 up and down scroll bar 32 until button 27 is released. Upon release, entries in the list of entries would appear which would correspond to the location of scroll region 37 on scroll bar 32.

Additionally shown in Figure 5 is an edit box 31. Edit box 31 may be used to type in the name of the selection. This allows the user to make a selection using keyboard 19, and without using mouse 20. For instance, rather than using a mouse to select the entry labelled "Close", a user could, using keyboard 19, type in the letters "c" "l" "o" "s" "e". The word "close" appear in edit box 31. Upon pressing "ENTER" on keyboard 19, a search control processor within main help module 16 would cause the entry "Close" to be selected.

Letters typed into edit box 31 also interacts with displayed entries 33 in list box 34 to allow for a shorthand method to select entries. When a first letter is typed into edit box 31, the search control processor causes the first selection in list box with the same first letter to be highlighted. For instance, if the letter "s" is typed in edit box 31, the entry "Select Item" would be highlighted. If a user presses "ENTER" on keyboard 19, the search control processor will cause the entry "Select Item" to be selected.

If instead the user types another letter, the search control processor causes the first entry in list box 34 with the same first two letters to be highlighted. For instance, if the user typed in the letter "e", the entry "Select Item" would remain highlighted. If, instead, the user typed in the letter "h", the entry "Shadow" would be highlighted. If the user now presses "ENTER" on keyboard 19, the search control processor will cause the entry "Shadow" to be selected.

This process continues for every letter typed into edit box 31. If at this point the user presses "BACKSPACE" on keyboard 19, the "h" will disappear from edit box 31. Additionally, the highlighting in list box 34 will match the entry in edit box 31, so that the entry "Shadow" will no longer be highlighted, but instead the entry "Select Item" will be highlighted. If the user presses "ENTER" on keyboard 19, the search control processor will cause the entry "Select Item" to be selected.

If the list of entries is larger than may be displayed within list box 34, this does not prevent non-displayed entries from being selected. The search control processor will continue to search through non-displayed entries looking for a match. If a match is found the search control processor will scroll displayed entries 33 to display the entry that matches.

If there is no entry that matches, the search control processor will scroll list box 34 to the top of the list of entries and no entries will be highlighted. If the user presses "ENTER" nothing will happen. An alternate embodiment could allow for an error message to be displayed.

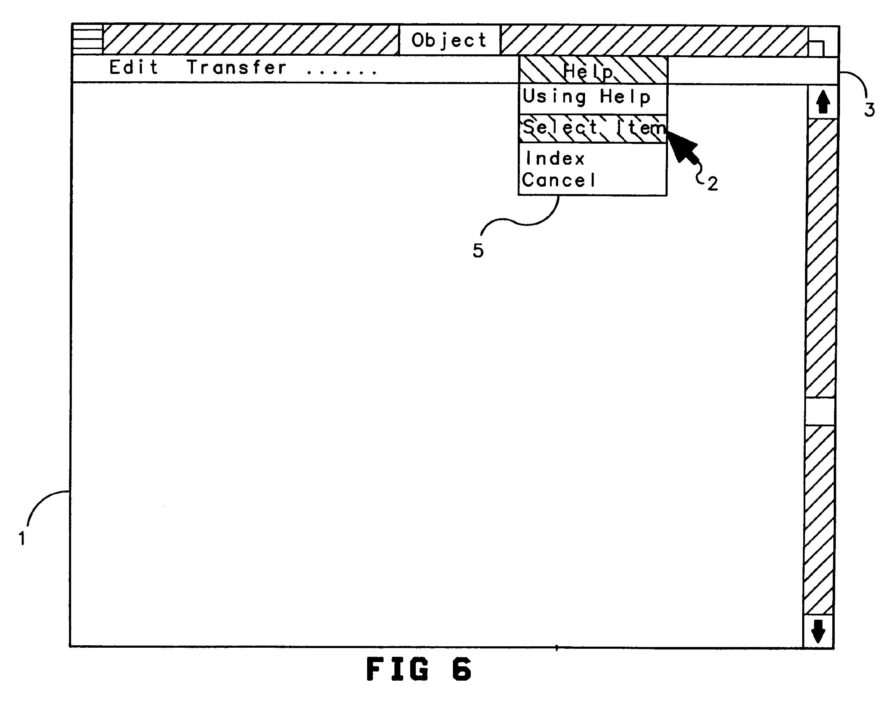

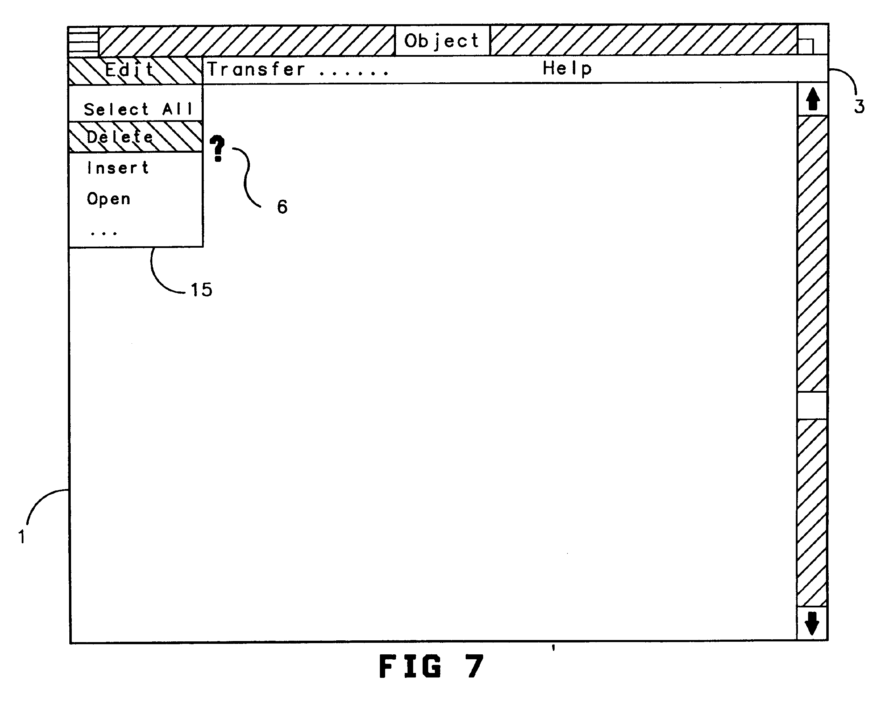

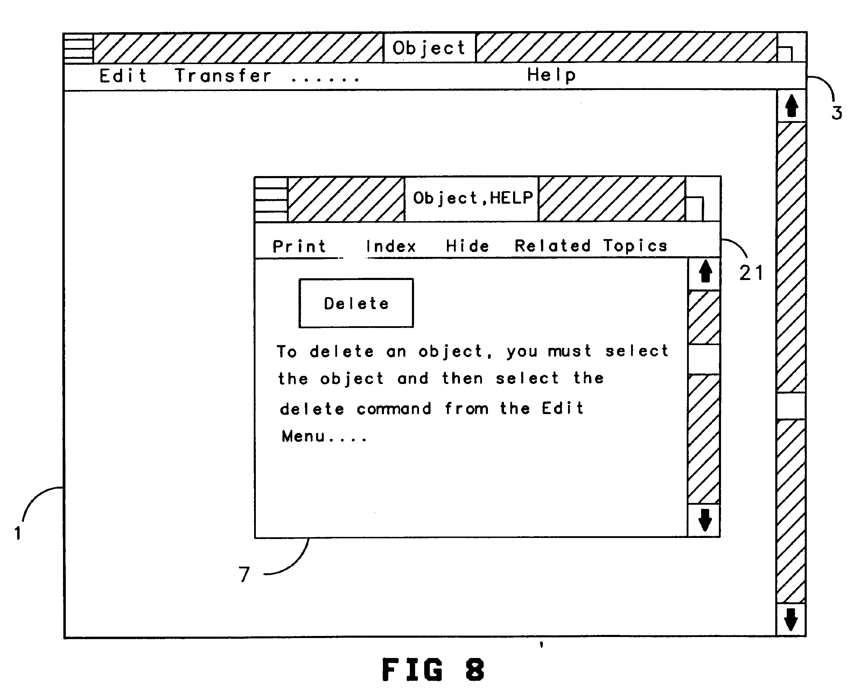

If instead of "Index", a user highlighted entry "Select Item" of menu 5, as shown in Figure 6, upon releasing button 27, a special help cursor 6 would appear as shown in Figure 7. A user may use Help cursor 6 to find out information about any command in command bar 3. For instance, if a user uses help cursor 6 to select "Edit" a menu 15 will appear. A user may highlight entries in menu 15 by depressing button 27 on mouse 20. Upon releasing button 27 information about the highlighted entry will appear. For instance if a user selects "Delete" a window 7 containing information about "Delete" will appear as shown in Figure 8. In addition, a command bar 21 allows a user other options. For instance, the user may print the information in window 7 by selecting "Print". The user may be selecting "Index" recall selection box 30 shown in Figure 5. The user may remove window 7 from being displayed by selecting "Hide". The user may view a list of related information by selecting "Related Topics."

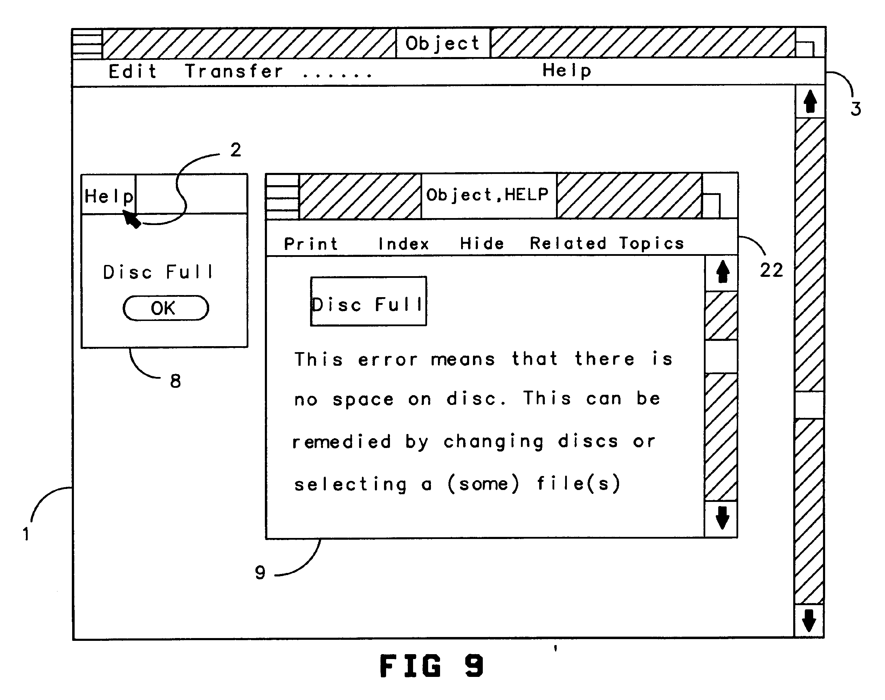

In addition to the methods listed above, applications 11, 12 and 13 may call main help module 16 under other special circumstances. For instances error messages may include a help box. An example, is shown in Figure 9. An error message 8 appeared in window 1 with a box entitled "Help". Using cursor 2 to select the "Help" box results in the display of a window 9 which more fully explains the error message. In addition, a command bar 22 allows a user other options.

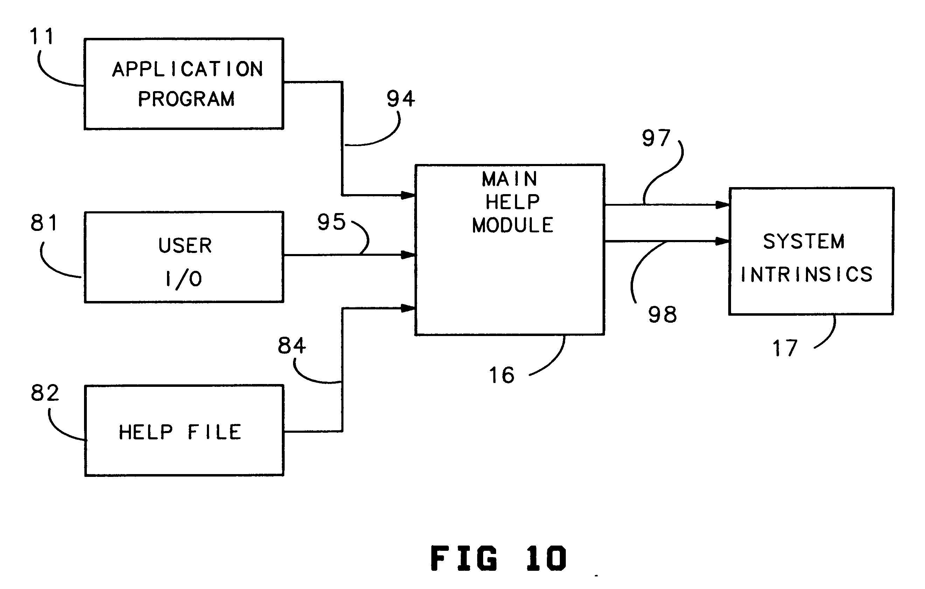

Main help module may be called by a number of application programs. Figures 10 through 16 show data flow through main help module 16 when called by a single application, application program 11.

Each application has associated with it a help file. The format of help files are the same for every application. Each help file, however, has text particular to its associated application program. In this way, Main Help Module 16 can utilize help files for different applications.

In Figure 10, main help module 16 receives messages from application program 11 through a data channel 94 and from user input/output devices 81 through a data channel 95. Main help module 16 also access information in help file 82 through a data channel 84. A separate help file exists for each application. Help file 82 contains text which provides help information for a user of application program 11. Main help module 16 sends help display data to system intrinsics 17 through a data channel 97, and sends window display data to system intrinsics 17 through a data channel 98.

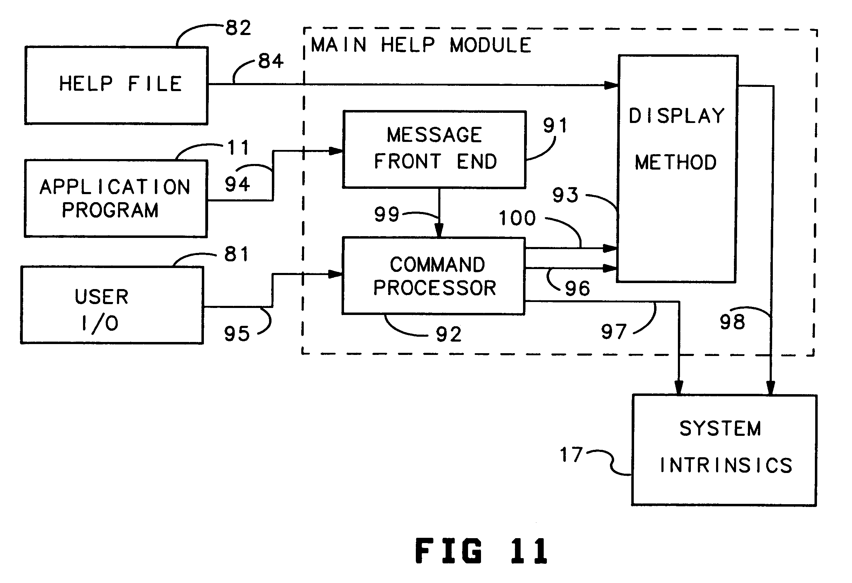

In Figure 11, main help module 16 is shown to include a message front end routine 91, a command processor routine 92 and a display method routine 93. Message front end routine 91 sends application messages to command processor routine 92 through data channel 99. Command processor routine 92 sends current application to display method routine 93 through a data channel 96 and sends an index offset to display method routine 93 through a data channel 100.

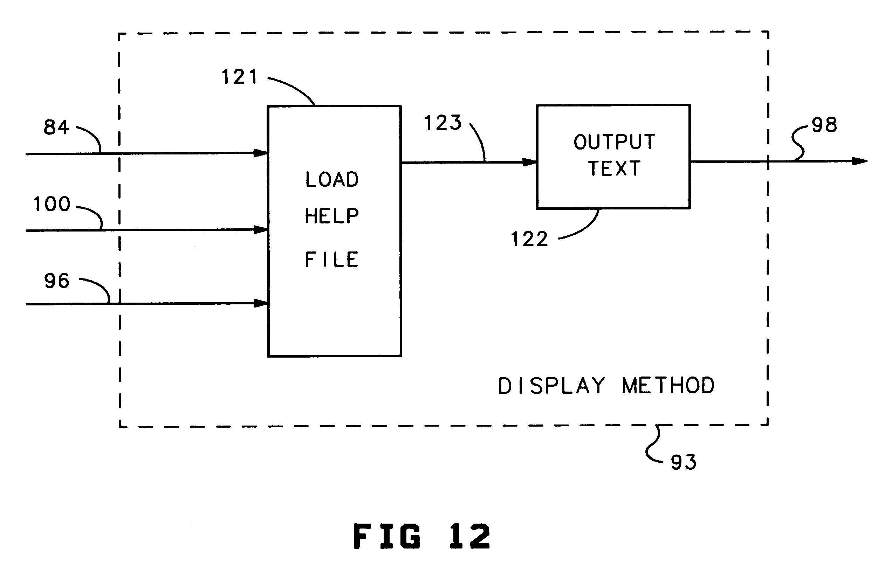

In Figure 12, display method routine 93 is shown to include a load help file routine 121 and an output text routine 122. Load help file routine 121 buffers output which it sends to output text routine 122 through data channel 123.

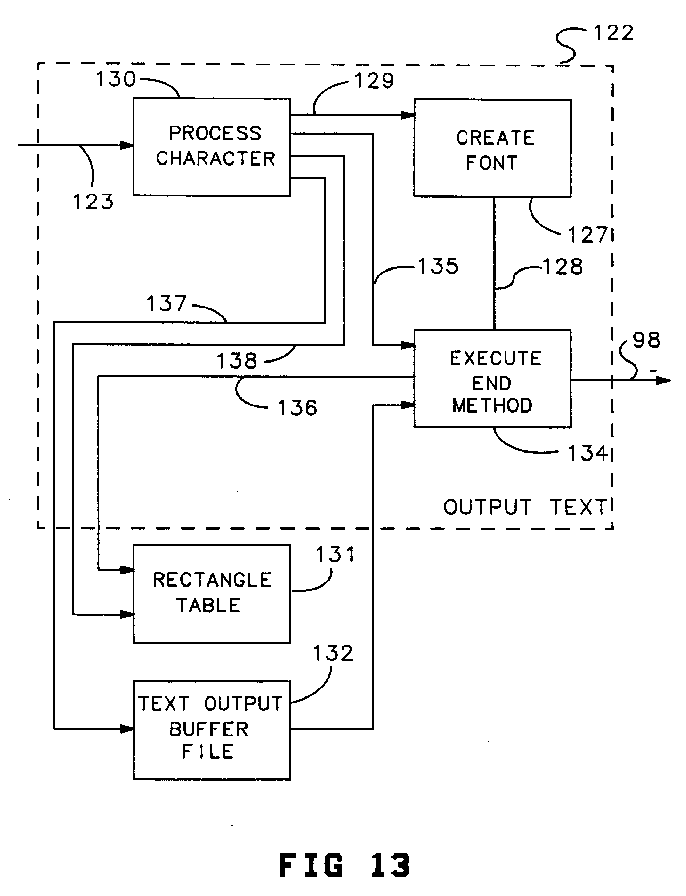

In Figure 13, output text routine 122 is shown to include a process character routine 130, a create font routine 127 and an execute end method routine 134. Process character routine 130 sends normal characters to a text output buffer file 132 through a data channel 137 and sends index offset information to a rectangle table file 131 through a data channel 138. Process character routine 130 also sends font information to create font routine 127 through a data channel 129 and sends information indicating end method type to execute end method routine 134 through a data channel 135.

Create font routine 127 sends fonts to execute end method routine 134 through a data channel 128. Execute end method routine 134 receives text from text output buffer file 132 through a data channel 139 and sends information containing a rectangle size to rectangle table file 131 through a data channel 136.

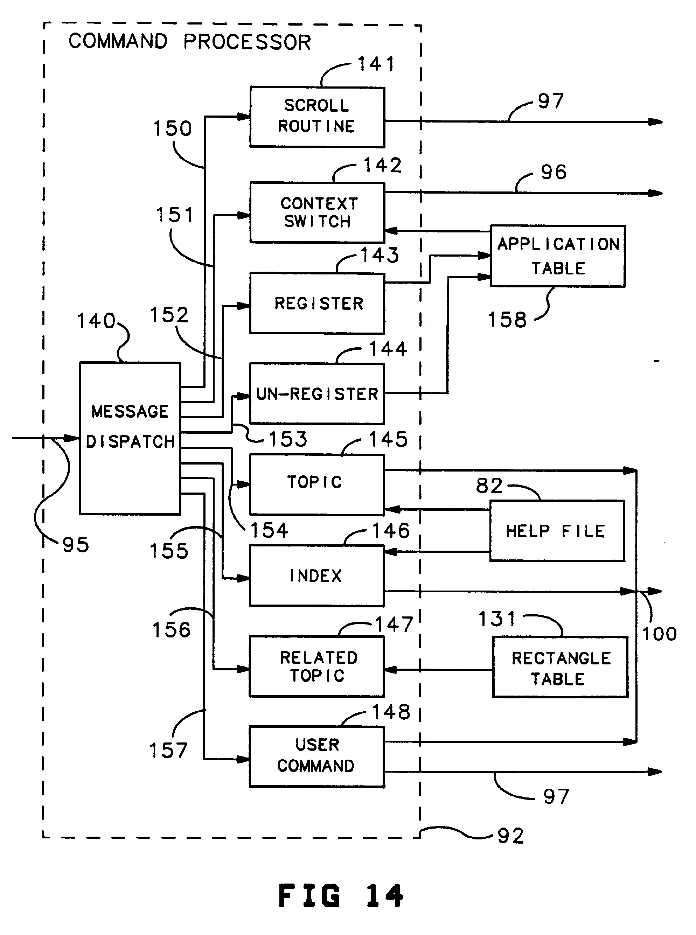

In Figure 14, command processor routine 92 is shown to include a message dispatch 140, a scroll routine 141, a context switch routine 142, a register routine 143, an un-register routine 144, a topic routine 145, an index routine 146, a related topic routine 147 and a user command routine 148. Message dispatch 140 sends scroll commands to scroll routine 141 through a data channel 150. Message dispatch 140 sends change connection commands to context switch routine 142 through a data channel 151. Message dispatch 140 sends register commands to register routine 143 through a data channel 152. Message dispatch 140 sends un-register commands to un-register routine 144 through a data channel 153. Message dispatch 140 sends topic commands to topic routine 145 through a data channel 154. Message dispatch 140 sends index commands to index routine 146 through a data channel 155. Message dispatch 140 sends related topic commands to related topic routine 147 through a data channel 156. Message dispatch 140 sends user message commands to user command routine 148 through a data channel 157.

An application table 158 receives output from register routine 143 and un-register routine 144 and is accessed by context switch routine 142.
Topic routine 145 and index routine 146 both access help file 82. Related topic routine accesses rectangle table 131.

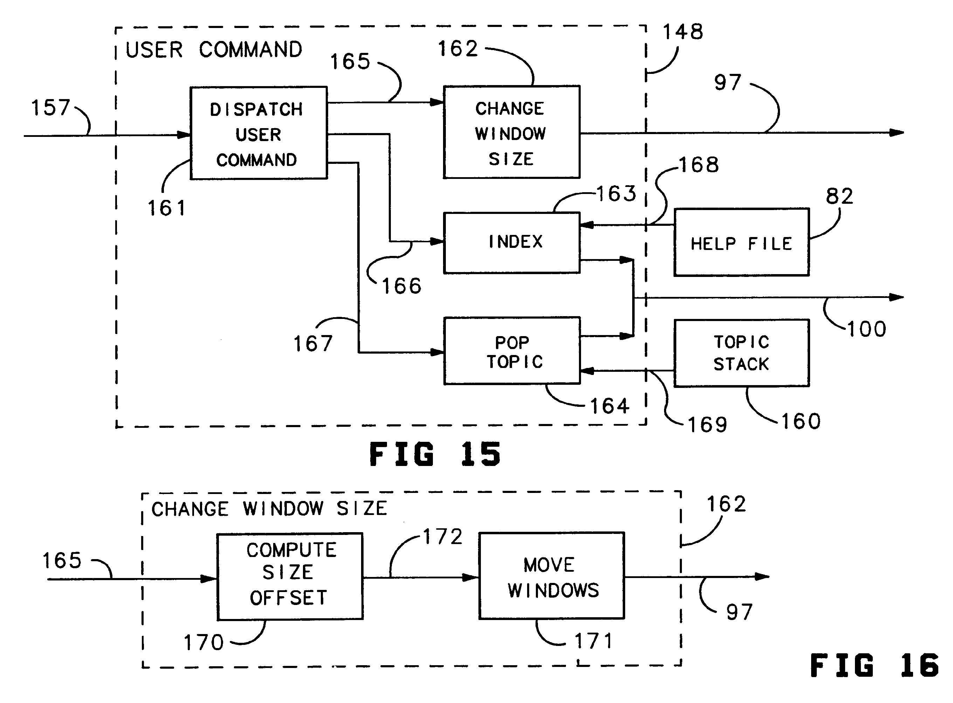

In Figure 15 user command routine 148 is shown to include a dispatch user command routine 161, a change window size routine 162, an index routine 163 and a pop topic routine 164. Dispatch user command routine sends change window size commands to change window size routine through a data channel 165. Dispatch user command routine 161 sends index commands to index routine 163 through a data channel 166. Dispatch user command routine 161 sends a command to retrieve a previous command to pop topic routine 164 through a data channel 167. Index routine 163 retrieves an index table from help file 82 through a data channel 168. Pop topic routine 164 accesses previous commands from topic stack 160 through a data channel 169.

In Figure 16, change window size routine 162 is shown to include a compute size offset routine 170 and a move windows routine 171. Compute size offset routine 170 sends a size offset to move windows routine 171 through a data channel 172.

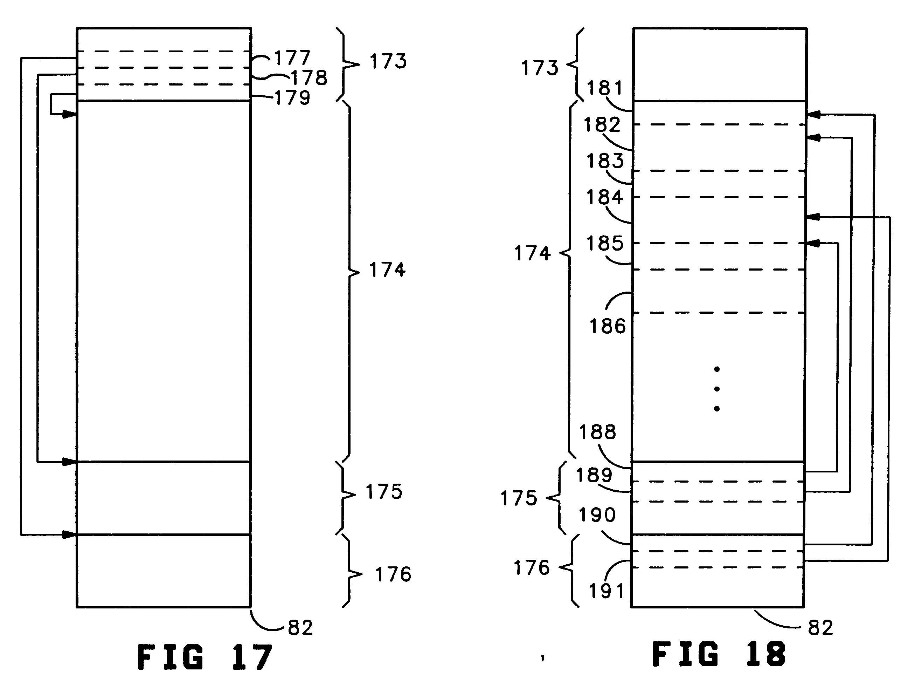

In Figure 17 the structure of help file 82 is shown. Help file 82 contains a file header 173, a section 174 containing a plurality of text headers accompanied by text, a section 175 containing a context table, and a section 176 containing an index table. File header 173 includes a pointer 179 to the first text header in section 174, a pointer 178 to the first context table entry in section 175 and a pointer 177 to the first index table entry in section 176.

In Figure 18 additional structure of help file 82 is shown. Section 174 contains a plurality of text headers, each text header being immediately followed by text. For instance, a text header and text 181, a text header and text 182, a text header and text 183, a text header and text 184, a text header and text 185 and a text header and text 186 are shown. Each text header and text are used for display to a user. A text header includes a topic name, a length of the following text and pointers to text headers for related topics. For instance, in window 9 shown in Figure 9, there is displayed the topic name "Disc Full" and the text "This error..." which follows.

The context table in section 175 is used by main help module 16 to locate text on a topic requested by user. A context entry 188 includes a pointer to a text header and text 185, and a context entry 189 includes a pointer to a text header and text 182.

The index table in section 176 is used by main help module 16 to index help text headers and text entries when a user uses selection box 30 shown in Figure 5. Each entry in the index table includes a pointer to a text header. For instance, an index entry 190 includes a pointer to text header and text 181. An index entry 191 includes a pointer to text header and text 184.

## Claims

1. A computing system in which a user may interact with a plurality of applications (11,12,13) which run thereon, said system having a help system comprising:
a plurality of help text files (82) wherein each help text file in the plurality of help text files is associated with an application in the plurality of applications (11,12,13) and;
a main help routine (16), which may be accessed by a user from every application in the plurality of applications (11,12,13) and which presents a user with help information for a currently running application in the plurality of applications by accessing data from the help text file in the plurality of help text files associated with said currently running, application; characterized in that said main help routine interactively presents the user with said help information by accessing said data in response to specific queries by the user for particular information.

2. A system according to claim 1 wherein each help text file (82) comprises:
a plurality of entries (174) each entry including a header, the header including a topic name, and each entry including text containing information about the topic named in the topic name.

3. A computing system according to claim 1 or claim 2 having a system memory (10) and a display (14),
said plurality of application programs (11,12,13),
said plurality of help text files (82),
and said main help routine (16) residing in the system memory (10).

4. A method for providing help information to a user from a plurality of applications (11,12,13), wherein for each application in the plurality of applications an associated help text file (82) which contains help information for the application is provided, the method comprising:
(a) using a single main help routine (16) to present a single user interface which is accessible from each application in the plurality of applications; and
(b) accessing the help text file (82) associated with a current running application for help information when a user requests help information from the current running application; and characterized by
(c) interactively presenting said help information to the user by accessing said help text file in response to specific queries by the user for particular information.

5. A method according to claim 4 wherein step (b) includes accessing and displaying a topic name and text.

## Patentansprüche

1. Ein Berechnungssystem, bei dem ein Anwender mit einer Mehrzahl von Anwendungen (11, 12, 13) wechselwirken kann, die auf diesem laufen, wobei das System ein Hilfesystem aufweist, das folgende Merkmale aufweist:
eine Mehrzahl von Hilfetextdateien (82), wobei jede Hilfetextdatei der Mehrzahl von Hilfetextdateien einer Anwendung der Vielzahl von Anwendungen (11, 12, 13) zugeordnet ist; und
eine Haupthilfe-Routine (16), auf die durch einen Anwender aus jeder Anwendung der Mehrzahl von Anwendungen (11, 12, 13) zugegriffen werden kann, und die einem Anwender Hilfeinformationen für eine derzeitig ablaufenden Anwendung der Mehrzahl von Anwendungen durch Zugriff auf Daten aus der Hilfetextdatei der Mehrzahl von Hilfetextdateien bereitstellt, die der derzeitig laufenden Anwendung zugeordnet ist;
dadurch gekennzeichnet,
daß die Haupthilfe-Routine dem Anwender durch Zugriff auf die Daten als Reaktion auf bestimmte Abfragen durch den Anwender nach bestimmten Informationen interaktiv Hilfeinformationen präsentiert.

2. Ein System gemäß Anspruch 1, bei dem jede Hilfetextdatei (82) folgende Merkmale aufweist:
eine Mehrzahl von Einträgen (174), wobei jeder Eintrag einen Kopf einschließt, wobei der Kopf einen Thema-Namen einschließt, und wobei jeder Eintrag einen Text einschließt, der Informationen über das Thema, das im Thema-Namen benannt ist, enthält.

3. Ein Berechnungssystem gemäß Anspruch 1 oder 2 mit einem Systemspeicher (10) und einer Anzeige (14), wobei die Mehrzahl von Anwendungsprogrammen (11, 12, 13), die Mehrzahl von Hilfetextdateien (82) und die Haupthilfe-Routine (16) in dem Systemspeicher (10) angeordnet sind.

4. Ein Verfahren zur Bereitstellung von Hilfeinformationen an einen Anwender aus einer Mehrzahl von Anwendungen (11, 12, 13), bei dem für jede Anwendung der Mehrzahl von Anwendungen eine zugeordnete Hilfetextdatei (82), die Hilfeinformationen für die Anwendung enthält, vorgesehen ist, wobei das Verfahren folgende Schritte umfaßt:
a) Verwenden einer einzelnen Haupthilfe-Routine (16), um eine einzelne Anwenderschnittstelle bereitzustellen, auf die aus jeder Anwendung der Mehrzahl von Anwendungen Zugriff genommen werden kann; und
b) Zugreifen auf die Hilfetextdatei (82), die einer derzeitig ablaufenden Anwendung zugeordnet ist, für Hilfeinformationen, wenn ein Anwender Hilfeinformationen von der derzeitig laufenden Anwendung abfragt; und
gekennzeichnet durch
c) Interaktives Präsentieren der Hilfeinformation an den Anwender durch Zugreifen auf die Hilfetextdatei als Reaktion auf die bestimmten Abfragen durch den Anwender nach bestimmten Informationen.

5. Ein Verfahren gemäß Anspruch 4, bei dem der Schritt (b) das Zugreifen und Anzeigen eines Thema-Namens und Textes einschließt.

## Revendications

1. Système de calcul dans lequel un utilisateur peut interagir avec une pluralité d'applications (11, 12, 13) en fonctionnement dans celui-ci, ledit système ayant un système d'aide comprenant:
une pluralité de fichiers de texte d'aide (82) dans lesquels chaque fichier de texte d'aide dans la pluralité de fichiers de texte d'aide est associé à une application dans la pluralité d'applications (11, 12, 13) et;
un sous-programme utilitaire d'aide principal (16) auquel un utilisateur peut accéder à partir de chaque application dans la pluralité d'applications (11, 12, 13) et qui présente de l'information d'aide à un utilisateur pour une application courante en fonctionnement dans la pluralité d'applications et cela en accédant à des données dans le fichier de texte d'aide dans la pluralité de fichiers de texte d'aide associés à l'application courante en fonctionnement;
caractérisé en ce que ledit sous-programme utilitaire d'aide principal présente de manière interactive ladite information d'aide à l'utilisateur en accédant auxdites données en réponse à des interrogations spécifiques de l'utilisateur pour disposer d'une information particulière.

2. Système selon la revendication 1, dans lequel chaque fichier de texte d'aide (82) comprend:
une pluralité d'entrées (174), chaque entrée incluant une en-tête, l'en-tête incluant un nom de thème, et chaque entrée incluant du texte contenant de l'information concernant le thème nommé dans le nom de thème.

3. Système de calcul selon la revendication 1 ou 2, ayant une mémoire de système (10) et un dispositif de visualisation (14), ladite pluralité de programmes d'application (11, 12, 13), ladite pluralité de fichiers de texte d'aide (82), et ledit sous-programme utilitaire d'aide principal (16) résidant dans la mémoire de système (10).

4. Procédé pour fournir de l'information d'aide à un utilisateur sur une pluralité d'applications (11, 12, 13), dans lequel, pour chaque application dans la pluralité d'applications, il est fourni un fichier de texte d'aide associé (82) qui contient de l'information d'aide pour l'application, le procédé comprenant:
(a) l'utilisation d'un seul sous-programme utilitaire d'aide principal (16) pour présenter une seule interface d'utilisateur qui est accessible à partir de chaque application dans la pluralité d'applications; et
(b) l'accession au fichier de texte d'aide (82) associé à une application courante en fonctionnement pour disposer de l'information d'aide lorsqu'un utilisateur demande de l'information d'aide à partir de l'application courante en fonctionnement; et étant caractérisé par
(c) une présentation de manière interactive de ladite information d'aide à l'utilisateur en accédant audit fichier de texte d'aide en réponse à des interrogations spécifiques de l'utilisateur pour disposer d'une information particulière.

5. Procédé selon la revendication 4, dans lequel l'étape (b) inclut l'accession à un nom de thème et à un texte, et la visualisation de ceux-ci.
